# EUROPEAN PATENT APPLICATION

(11) **EP 4 293 090 A1**
(43) Date of publication of application: **20.12.2023**
(21) Application number: 22305865.2
(22) Date of filing: 14.06.2022
(51) Int. Cl.: C09J 153/02

(54) **HOT MELT PRESSURE-SENSITIVE ADHESIVE COMPOSITION**

(71) Applicant: Bostik SA, 92700 Colombes (FR)
(72) Inventor: RAFAITIN, Amandine, 60280 Venette (FR)
(74) Representative: Arkema Patent

(57) **Abstract**

The present invention relates to a hot melt pressure-sensitive adhesive composition comprising:
- at least 20% by weight of one or more block copolymer(s) (P1) comprising :
o a polymer block (A) containing a structural unit derived from an isoprenoid conjugated diene,
o a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- at least one bio-based tackifier resin selected from the group consisting of:
o natural or modified rosins such as, for example, gum rosins, wood rosins, tall-oil rosins, distilled rosins, (partially or fully) hydrogenated rosins, dimerized rosins and polymerized rosins;
o polyterpene derivatives;
o and mixtures thereof;
wherein the hot melt adhesive composition has a glass transition temperature lower than 0°C.

## Description

### TECHNICAL FIELD

The present invention relates to a bio-based hot melt pressure-sensitive adhesive composition, and its uses.

### TECHNICAL BACKGROUND

Pressure-sensitive adhesives (PSAs) are substances which give the support layer which is coated therewith an immediate tack at ambient temperature (23°C). This immediate tack enables the instantaneous adhesion of said self-adhesive support to all types of substrates, under the effect of a gentle and brief pressure. PSAs are widely used for the manufacture of self-adhesive labels which are attached to articles (for example packaging) for the purpose of presenting information (such as barcode, name, price) and/or for decorative purposes. PSAs are also employed in the manufacture of self-adhesive tapes of varied uses. Mention may be made, for example, besides the transparent adhesive tape widely used in daily life, of the forming and the assembling of cardboard packagings; the protection of surfaces for painting operations, in the building industry; the maintenance of electric cables in the transportation industry: the adhesive bonding of fitted carpets by double-sided adhesive tapes.

PSAs are generally applied, by continuous coating processes carried out by industrial machines known as "coaters", over the whole of the surface of a large-sized support layer, where appropriate which is printable, in an amount (generally expressed in g/m²) denoted hereinbelow by the term "weight per unit area". The support layer generally consists of paper or of film of a polymeric material having one or more layers. The layer of self-adhesive composition which covers the support layer is itself covered with a protective nonstick layer (often known as a release liner), which often consists of a silicone film. The multilayer system obtained is generally packaged by winding in the form of large reels (or rolls) up to 2 m in width and 1 m in diameter, which can be stored and transported, such packaging often being referred to by the expression "roll stock".

This multilayer system can subsequently be converted into self-adhesive labels which can be applied by a label manufacturer referred to as a "converter", by means of conversion processes which include the printing of desired informative and/or decorative elements onto the printable face of the support layer, followed by cutting to the desired shape and sizes.

The protective nonstick layer can be easily removed without modifying the adhesive layer, which remains attached to the printable support layer. After separation from its nonstick protective layer, the label is applied in general at a temperature close to ambient temperature (23°C) to the article (for example the packaging) to be coated, either manually or with the aid of labelling machines on automated packaging lines.

This multilayer system can also be converted into self-adhesive tapes by cutting and packaging as rolls of predetermined width and length.

PSAs advantageously allow, due to their high ambient-temperature tack, rapid holding or attachment of the self-adhesive label and/or tape to the substrate (or article) to be coated (for example, as regards labels, on packagings, or else, as regards tapes, on packing boards to be formed), suitable for obtaining high industrial production rates.

Hot-melt adhesives or hot melts (HMs) are substances that are solid at ambient temperature and contain neither water nor solvent. They are applied in the melt state and solidify on cooling, thus forming a joint which, due to its adhesive strength, attaches the substrates to be assembled. Certain hot melts are formulated in such a way as to give the support coated therewith a relatively hard and tack-free character. Other hot melts provide the support with a relatively soft character and a high tack; these are PSAs which are widely used for the manufacture of self-adhesive articles (for example self-adhesive labels). The corresponding adhesives are denoted by the designation "hot-melt pressure-sensitive adhesives" (or HMPSA). HMPSA are thus a different category than hot melt. HM. They therefore also make it possible, owing to their adhesive strength, to firmly attach the label or the tape to the desired substrate, whether it is for example packaging to be labeled or board to be assembled.

Refrigerated and cold food labels may be primarily intended to communicate important product messaging, nutrition information and branding information, but they also help products sell. Indeed, most of the consumers will try a new product if a packaging catches their eyes. Impressions take about seven seconds, making subsequent judgments based on quick information. Thus, a label falling off from a packaging will impact negatively the consumers. In beverage labeling, bottles often move from place to place, like a cold refrigerator to a warm car, creating condensation and affecting label performance. In refrigerated labeling, if outdoor temperatures are hot and humid, labels may fall off when transported from store to home.

Refrigerated food manufacturers need product packaging labels that are visually appealing, showcase superior product packaging, adhere quickly and easily, conform to a variety of packaging types and stay in place as intended for the product's life cycle.

Conventional hot melt pressure sensitive adhesives are petrochemical-based, and rely on energy-intensive processes. In addition, a large percentage of the petroleum is transported from various parts of the world, which increases the carbon footprint. Generally, zero to very few raw materials in hot melt pressure sensitive adhesives are made from renewable resources and thus contribution is not enough on the impact of the environment.

There is an increased desire to reduce carbon footprint and to produce environmentally sound products. One method of making an environmentally sound adhesive is to decrease carbon footprint by forming a hot melt pressure sensitive adhesive from materials having a high renewable resource content.

However, hot melt pressure sensitive adhesives made from renewable materials do not necessarily allow to reach similar or better properties (adhesiveness) than conventional petroleum-based adhesives.

There is thus a need for providing environment-friendly hot melt pressure sensitive adhesives that allows to resolve at least a part of the above-mentioned drawbacks.

More particularly, there is thus a need for environment-friendly hot melt pressure sensitive adhesive having good adhesive properties on a wide range of temperature, in particular from -10°C to room temperature (23°C).

There is a need for environment-friendly hot melt pressure sensitive adhesive exhibiting a good peel on a wide range of temperature, even at temperature below room temperature (23°C), with a high tack.

### DESCRIPTION OF THE INVENTION

The present invention concerns a hot melt pressure-sensitive adhesive composition comprising:
- at least 20% by weight of one or more block copolymer(s) (P1) comprising :
   ∘ a polymer block (A) containing a structural unit derived from an isoprenoid conjugated diene,
   ∘ a non-elastomeric polymer block (B) containing a structural unit derived from an aromatic vinyl compound;
   wherein said block copolymer (P1) has a biocarbon content equal to or higher than 45%, and said block copolymer (P1) is at least partially hydrogenated;
- at least one bio-based tackifier resin selected from the group consisting of:
   ∘ natural or modified rosins such as, for example, gum rosins, wood rosins, tall-oil rosins, distilled rosins, (partially or fully) hydrogenated rosins, dimerized rosins and polymerized rosins;
   ∘ polyterpene derivatives;
   ∘ and mixtures thereof;
   wherein the hot melt adhesive composition has a glass transition temperature lower than 0°C.

The carbon of a biomaterial derives from the photosynthesis of plants and therefore from atmospheric CO₂. The degradation (by degradation is also meant combustion/incineration at the end of their life) of these materials into CO₂ does not therefore contribute to warming since there is no increase in the carbon emitted into the atmosphere. The CO₂ balance of biomaterials is therefore clearly improved and contributes to reducing the carbon footprint of the products obtained (only the energy for manufacturing is to be taken into account). On the contrary, a material of fossil origin which also degrades into CO₂ will contribute to an increase in the level of CO₂ and therefore to global warming.

The term *"bio-carbon"* indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 × 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-06) and ASTM D 7026 (ASTM D 7026-04). The ASTM D 6866 standard is *"Determining the Biobased Content of Natural Range Materials Using Radiocarbon and Isotope Ratio Mass Spectrometry Analysis",* while the ASTM D 7026 standard is *"Sampling and Reporting of Results for Determination of Biobased Content of Materials via Carbon Isotope Analysis".* The second standard makes reference in its first paragraph to the first standard.

The first standard describes a test for measuring the ¹⁴C/¹²C ratio of a sample and compares it with the ¹⁴C/¹²C ratio of a reference sample of 100 % renewable origin, to give a relative percentage of C of renewable origin in sample. The standard is based on the same concepts as ¹⁴C dating, but without applying the dating equations.

The ratio thus calculated is referred to as the *"pMC"* (percent Modern Carbon). If the material to be analyzed is a mixture of biomaterial and fossil material (without radioactive isotope), then the pMC value obtained is directly correlated with the quantity of biomaterial present in the sample. The reference value used for the ¹⁴C dating is a value dating from the 1950s. This year was chosen because of the existence of nuclear tests in the atmosphere which introduced large quantities of isotopes into the atmosphere after this date. The 1950 reference corresponds to a pMC value of 100. Taking into account the thermonuclear tests, the current value to be retained is approximately 107.5 (which corresponds to a correction factor of 0.93). The radioactive carbon signature of a current plant is therefore 107.5. A signature of 54 pMC and 99 pMC therefore correspond to an amount of biocarbon in the sample of 50 % and 93 %, respectively.

### Hot melt pressure-sensitive adhesive composition

### Block copolymer (P1)

First of all, the hot melt pressure sensitive adhesive composition comprises at least one block copolymer (P1) comprising :
- a polymer block (A) containing a structural unit derived from an isoprenoid conjugated diene,
- a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated.

The block copolymer (P1) may further comprise a polymer block (C) comprising a structural unit derived from a conjugated diene except isoprenoid conjugated diene as defined herein.

### Block (A)

As used herein, the term "isoprenoid conjugated diene" refers to the group of conjugated diene that have two, three or more isoprene units combined. For example, farnesene (3,7,11-trimethyl-1,3,6,10-dodecatetraene) is a conjugated diene with 3 isoprene units combined, or myrcene which is a conjugated diene with two isoprene units.

The structural unit derived from isoprenoid conjugated diene, may comprise more than 30% by weight, preferably more than 50% by weight, more preferably more than 70% by weight, and further more preferably more than 90% by weight of isoprenoid conjugated diene, based on the total weight of said structural unit.

The isoprenoid conjugated diene may be selected from myrcene, farnesene, and mixtures thereof.

The farnesene may be α-farnesene or β-farnesene, or mixtures thereof. Preferaby the farnesene is β-farnesene.

The isoprenoid conjugated diene may derived from renewable material, such as for example sugar cane.

Preferably, the isoprenoid conjugated diene is farnesene. Preferably, the farnesene is derived from the fermentation of sugar from sugar cane.

The polymer block (A) may further comprise a structural unit derived from a copolymerizable monomer except isoprenoid conjugated dienes as defined herein. The copolymerizable monomer may be an unsaturated hydrocarbon compound such as for example propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene ; a functional group-containing unsaturated compound such as for example acrylic acid, methacrylic acid, methyl acrylate, methyl methacrylate, acrylonitrile, methacrylonitrile, maleic acid, fumaric acid, crotonic acid, itaconic acid, 2-acrylolethane-sulfonic acid, vinylsufonic acid, vinyl acetate, methyl vinyl ether.

The polymer block (A) may comprise more than 60 % by weight, preferably more than 80 % by weight, even more preferably more than 90% by weight of structural units derived from an isoprenoid conjugated diene.

The polymer block (A) may be partially or fully hydrogenated.

### Block (B)

The block copolymer (P1) comprises a non-elastomeric block (B) containing a structural unit derived from an aromatic vinyl compound, also referred herein as "polymer block (B)".

The polymer block (B) may be obtained from aromatic vinyl compounds such as for example styrene, α-methylstyrene, 2-methylstyrene, 3-methylstyrene, 4-methylstyrene, 4-propylstyrene, 4-tbutylstyrene, 4-cyclohexylstyrene, 4-dodecylstyrene, 2,4-dimethylstyrene, 2,4,6-trimethylstyrene, 2-ethyl-4-benzylstyrene, 4-(phenylbutyl)styrene, 1-vinylnaphtalene, 2-vinylnaphtalene, vinylanthracene, divinylstyrene, and mixtures thereof. Preferably, the aromatic vinyl compound is styrene.

The polymer block (B) may further comprise a structural unit derived from a copolymerizable monomer except isoprenoid conjugated dienes as defined herein. The copolymerizable monomer may be an unsaturated hydrocarbon compound such as for example propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene ; a functional group-containing unsaturated compound such as for example acrylic acid, methacrylic acid, methyl acrylate, methyl methacrylate, acrylonitrile, methacrylonitrile, maleic acid, fumaric acid, crotonic acid, itaconic acid, 2-acrylolethane-sulfonic acid, vinylsufonic acid, vinyl acetate, methyl vinyl ether.

The polymer block (B) may comprise more than 80 % by weight, preferably more than 90 % by weight, even more preferably more than 95% by weight of structural units derived from aromatic vinyl compounds.

Preferably, the non-elastomeric block (B) is a polystyrene block.

The polymer block (B) may be partially or fully hydrogenated.

### Block (C)

The block copolymer (P1) may comprise a polymer block (C) comprising a structural unit derived from a conjugated diene except isoprenoid conjugated diene as defined herein.

The conjugated diene except isoprenoid conjugated diene may comprise butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, chloroprene.

Preferably, the conjugated diene is selected from butadiene, isoprene and mixtures thereof.

The polymer block (C) may be partially or fully hydrogenated.

The block copolymer (P1) according the invention may be linear or radial block copolymer. It may be a diblock copolymer, a triblock copolymer, a multiblock copolymer, or any mixtures. The bonding arrangement of the polymer block (A), polymer block (B) and optional polymer block (C) is not specifically limited, and may be linear, branched, radial, or any combination of two or more of them.

The block copolymer (P1) is preferably a multiblock copolymer.

A multiblock copolymer may be a tetra-block copolymer represented for example by [A-B-C-B], a penta-block copolymer represented by [A-B-C-B-A], a poly-block copolymer represented by [A-B-(C-B)ₗ-A], [A-B-(C-B-A)ₘ], or [A-(B-C-B-A]ₙ] (where l, m and n each independently represent an integer or 2 or more).

The styrene content in the block copolymer (P1) may range from 2 to 50 %, preferably from 5 to 40%, more preferably from 8 to 30%, and even more preferably from 15 to 25%.

The block copolymer (P1) is at least partially hydrogenated, which means that it may be partially or fully hydrogenated.

The hydrogenation rate of the total carbon-carbon double bonds in the block copolymer (P1) may range from 50 to 100 mol%, preferably from 70 to 100 mol%.

The hydrogenation rate can be calculated by ¹H-NMR analysis of the block copolymer (P1) before and after hydrogenation.

The block copolymer (P1) has preferably a biocarbon content ranging from 45% to 80%, more preferably from 45% to 65%. The biocarbon content is determined as mentioned above.

The block copolymer (P1) may have a melt flow rate (MFR) higher than 100 g/10 min, preferably higher than 500 g/10 min, and more preferably higher than 700 g/ 10 min. The method for measuring the MFR is according to ISO 1133, at 230°C and 10 kg.

The block copolymers may be prepared by anionic polymerization using techniques known in the art. For example, the polymerization may be carried out in presence of a polymerization initiator such organic alkali metal compound, in suitable solvents such as aliphatic, cycloaliphatic or aromatic hydrocarbons. If desired, Lewis base additive can be employed. The polymerization reaction temperature may range from 10 to 90°C.

Then, the hydrogenation step can be done by any known method. For example, the block copolymer may be dissolved in a solvent not having influence on hydrogenation to prepare a solution, and hydrogenated in the presence of a Ziegler catalyst or nickel, platinum, ruthenium or rhodium metal, and in presence of hydrogen.

Useful commercial block copolymers (P1) include Biosepton^{®} SF902 (styrene block copolymer derived from farnesene, biocarbon content = 80%, MFR = 55 g/10 min at 230°C/1 0kg) and Biosepton^{®} SF904 (styrene block copolymer derived from farnesene, MFR > 700 g/10 min at 230°C/10 kg, biocarbon content = 48%), commercialized by Kuraray.

The hot melt pressure-sensitive adhesive composition preferably comprises 35% or more, more preferably 40% or more, even more preferably 45% or more by weight of the at least one block copolymer (P1) (or of the mixture of block copolymers (P1) in case a plurality of block copolymers (P1) are present in the hot melt pressure-sensitive adhesive composition) relative to the total weight of the composition. More preferably, the hot melt pressure-sensitive adhesive composition preferably comprises more than 50% by weight of the at least one block copolymer (P1) (or of the mixture of block copolymers (P1) in case a plurality of block copolymers (P1) are present in the hot melt pressure-sensitive adhesive composition) relative to the total weight of the composition.

### Tackifier resin

The hot melt pressure-sensitive adhesive composition further comprises at least one bio-based tackifier resin selected from the group consisting of:
∘ natural or modified rosins such as, for example, gum rosins, wood rosins, tall-oil rosins, distilled rosins, (partially or fully) hydrogenated rosins, dimerized rosins and polymerized rosins;
∘ polyterpene derivatives;
∘ and mixtures thereof.

By *"bio-based tackifier resin"* is meant a tackifier resin that derives at least partially from a biomaterial.

The bio-based tackifier resin may have a biocarbon content equal to or higher than 85 %, preferably equal to or higher than 90 %, and more preferably equal to or higher than 93 %.

The bio-based resins may have a biocarbon content of 100 %. Therefore, these resins may have a ¹⁴C/¹²C isotope ratio equal to or higher than 1.02 × 10⁻¹², preferably equal to or higher than 1.08 × 10⁻¹², more preferably equal to or higher than 1.11 × 10⁻¹², or even a ¹⁴C/¹²C isotope ratio of 1.2 × 10⁻¹².

The terpene derivatives typically include polyterpene homopolymers, copolymers of terpene with a diene monomer (for example styrene, methylstyrene, etc), phenolic-modified terpene resins.

The terpene derivatives include the non-hydrogenated, as well as the partially or fully hydrogenated derivatives. For example, polyterpene homopolymers include the non-hydrogenated polyterpene homopolymers, the partially polyterpene homopolymers and the fully-hydrogenated polyterpene homopolymers.

Preferably, the bio-based tackifier resin is at least partially hydrogenated.

In a preferred embodiment, the bio-based tackifier resin is selected from natural or modified rosins such as, for example, gum rosins, wood rosins, tall-oil rosins, distilled rosins, (partially or fully) hydrogenated rosins, dimerized rosins and polymerized rosins. Even more preferably, the bio-based tackifier resin is selected from partially or fully hydrogenated rosins.

The bio-based tackifier resin may have a Ring and Ball softening point from 70 to 150°C. The softening point may be measured by using the ASTM E28 standard.

As examples of commercially available tackifier resins mention may be made of: the partially hydrogenated rosin from Eastman sold under the trade name Foralyn^{®} E; the fully hydrogenated rosin from Eastman sold under the trade name Foral^{®} AX-E; the fully hydrogenated rosin from DRT sold under the trade name Foral^{®}DX; the polyterpene from DRT sold under the trade name DERCOLYTE^{®}M1Q5, resulting from the polymerization of α-pinene and β-pinene and having a Ring and Ball softening point of 105°C; the terpene phenol resins from the Arizona Chemical Company sold under the trade names Sylvares^{®} TP (96, 2040, 300, 7042, 2019).

The hot melt pressure sensitive adhesive composition may comprise from 20% to 80 %, preferably from 40% to 75%, even more preferably from 40% to 70% by weight of the bio-based tackifier resin (or of the mixture of bio-based tackifier resins in case a plurality of bio-based tackifier resins are present in the hot melt adhesive composition) relative to the total weight of the composition.

### Plasticizer

The hot melt pressure sensitive adhesive composition may further comprise at least one plasticizer.

Preferably, the plasticizer may have a bio-carbon content equal to or higher than 80%, more preferably equal to or higher than 85%, and even more preferably equal to or higher than 90%.

Therefore, the plasticizer may have a ¹⁴C/¹²C isotope ratio equal to or higher than 0.96 × 10⁻¹², preferably equal to or higher than 1.02 × 10⁻¹², more preferably equal to or higher than 1.08 × 10⁻¹², more preferably equal to or higher than 1.14 × 10⁻¹², or even a ¹⁴C/¹²C isotope ratio equal to 1.2 × 10⁻¹².

The plasticizer may be chosen from an esterified fatty acid, a stand oil of a vegetable oil, diene homopolymers, and mixtures thereof, preferably from an esterified fatty acid, a stand oil of vegetable oil, and mixtures thereof.

The diene homopolymers are preferably liquid at 23°C and selected from polybutadiene, polyfarnesene, and mixtures thereof.

In case the plasticizer is an esterified fatty acid, the fatty acid may comprise from 6 to 30 carbon atoms, preferably from 10 to 22 carbon atoms, more preferably from 14 to 22 carbon atoms and even more preferably from 16 to 18 carbon atoms.

The fatty acid may be derived from a vegetable oil such as castor oil, sunflower oil, coconut oil, corn oil, canola oil, olive oil, palm oil, cottonseed oil, rapeseed oil, safflower oil, soybean oil, sesame oil, olive oil, almond oil, avocado oil, hemp oil, and linseed oil.

A vegetable oil is a composition comprising triple esters of fatty acids and of glycerol (also called *"triglycerides*")*.*

The expression "*fatty acids derived from vegetable oil*" is thus intended to designate the fatty acids present in the molecular structure of these triglycerides. Said fatty acids can be obtained, in the form of isolated compounds, by saponification, hydrolysis or methanolysis of said triglycerides.

The fatty acid may thus be chosen from myristic acid, palmitic acid, stearic acid, oleic acid, linoleic acid, and ricinoleic acid.

The fatty acid may be a hydrogenated or non-hydrogenated fatty acid.

The esterified fatty acid may result from the transesterification reaction between a mono-alcohol and the triglyceride. In this case, the mono-alcohol may notably be chosen from methanol, ethanol, propanol, isopropanol, butanol, and 2-ethylhexanol.

The alcohol may derive from a biomaterial which makes it thus possible to increase the biocarbon content of the plasticizer and thus of the composition.

An example of an esterified fatty acid resulting from the transesterification reaction between a mono-alcohol and the triglyceride may be the commercially available RADIA 7916 commercialized by OLEON.

The esterified fatty acid may also result from a transesterification reaction between a polyol and the triglyceride. In this case, the polyol may be chosen from glycerol and pentaerythritol.

An example of an esterified fatty acid resulting from a transesterification reaction between a polyol and the triglyceride may be the commercially available RADIA 7176 (Pentaerythritol Tetrastearate) commercialized by OLEON.

By "*stand oif*" is meant a polymerized vegetable oil.

The stand oil is obtained by heating said vegetable oil in the absence of oxygen and at a temperature higher than 200°C, preferably higher than 270°C and even more preferably at a temperature from 270 to 360°C.

It is generally accepted that this heating causes a thermal polymerization reaction of the oil, which involves in particular the polymerization of the double bonds and the crosslinking of the corresponding triglycerides, which has the effect of increasing the viscosity of said oil. This reaction is often referred to as a "*standolization reaction*".

The heating of the vegetable oil is maintained for a time sufficient to obtain a Brookfield viscosity, measured at 20°C, greater than or equal to 50 mPa.s, preferably greater than or equal to 100 mPa.s.

The stand oil may be a stand oil of a vegetable oil whose fatty acids contain 6 to 30 carbon atoms.

Preferably, the stand oil is a stand oil of a vegetable oil whose derived fatty acids comprise a proportion of at least 75 % of fatty acids comprising from 16 to 22 carbon atoms, said proportion being expressed as a percentage in weight based on the total weight of fatty acids derived from said oil.

Preferably, the proportion of fatty acids comprising from 16 to 22 carbon atoms may be at least 80 % by weight, and even more preferably at least 85 % by weight, relative to the total weight of the fatty acids derived from vegetable oil.

The stand oil may be chosen from stand oil obtained from sunflower oil, rapeseed oil, linseed oil and soybean oil.

Stand oils are commercially available, and we can cite for example the following products available from the company Vandeputte:
- as soybean stand oil, Veopol^{®} 315002 whose Brookfield viscosity at 20°C is 267 mPa.s and Veopol^{®} 215035 whose Brookfield viscosity at 20°C is 4420 mPa.s;
- as flax stand oil, Veopol^{®} 212055 whose Brookfield viscosity at 20°C is of 5870 mPa.s.

The hot melt pressure-sensitive adhesive composition preferably comprises less than 20% by weight of plasticizer(s), more preferably less than 10%, even more preferably less than 5% based on the total weight of said composition. In a preferred embodiment, the hot melt pressure-sensitive adhesive composition comprises less than 1% by weight based on the total weight of said composition.

### Additives

The hot melt pressure sensitive adhesive composition of the invention may optionally include one or several additives. Such additives may include waxes, antioxidants, pigments, brightening agents, colorants, fluorescing agents, dyestuffs, fillers, flow and leveling agents, wetting agents, surfactants, antifoaming agents, rheology modifiers, emulsifiers, humectants, gelling agent, colorants, other surface modifying agents, fragrances, and permeation enhancers. Preferably, the additives are also bio-based. Additives may be incorporated in minor amounts, for example up to about 10 %, preferably up to 5 %, by weight, into the hot melt pressure-sensitive adhesive composition of the present invention.

Useful antioxidants may include for example, pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof.

Useful antioxidants are commercially available under a variety of trade names including, e.g., the IRGANOX series of trade names including IRGANOX 1010, IRGANOX 565, and IRGANOX 1076 hindered phenolic antioxidants and IRGAFOS 168 phosphite antioxidant, all of which are available from BASF Corporation, and ETHYL 702 4,4'-methylene bis(2,6-di-tert-butylphenol).

### Hot melt pressure-sensitive adhesive

Preferably, the hot melt pressure-sensitive adhesive composition comprises less than 5% by weight of a styrene block copolymer different from P1, even more preferably less than 1% by weight, or more preferably it does not comprise other styrene block copolymer different from P1. The styrene block copolymer different from P1 may be styrene-isoprene-styrene block copolymer (SIS), styrene-isoprene-butadiene-styrene block copolymer (SIBS), syrene-butadiene-styrene block copolymer (SBS), styrene-ethylene-butylene-styrene block copolymer (SEBS), styrene-propylene-butylene-styrene block copolymer (SPBS), styrene-butadiene-butylene-styrene block copolymer (SBBS), styrene-ethylene-propylene-styrene block copolymer (SEPS), and mixture thereof.

The hot melt pressure-sensitive adhesive composition according to the invention preferably comprises:
- more than 35% by weight of at least one block copolymer (P1) (relative to the total weight of the composition) comprising :
   ∘ a polymer block (A) containing a structural unit derived from an isoprenoid conjugated diene,
   ∘ a non-elastomeric polymer block (B) containing a structural unit derived from an aromatic vinyl compound;
   wherein said block copolymer (P1) has a biocarbon content equal to or higher than 45%, and said block copolymer (P1) is at least partially hydrogenated;
- from 20% to 80 %, preferably from 40% to 75%, even more preferably from 50% to 70% by weight of at least one bio-based tackifier resin relative to the total weight of the composition, said bio-based tackifier being as defined above;
- less than 20%, preferably less than 10%, and more preferably less than 5% by weight of at least one plasticizer relative to the total weight of the composition;
wherein the hot melt pressure sensitive adhesive composition has a glass transition temperature lower than 0°C.

The biocarbon content of the hot melt adhesive may be greater than or equal to 65 %, preferably greater than or equal to 70 %.

The hot melt adhesive composition has a glass transition temperature lower than 0°C.

Preferably, the hot melt adhesive composition has a glass transition temperature preferably comprised from 0°C to -10°C, even more preferably from -4°C to -10°C.

The glass transition temperature is measured by dynamic mechanical analysis (DMA).

For example, the Tg may be measured as follows using ARES by Rheometric Scientific: the hot melt pressure sensitive adhesive composition is placed between two parallel plate. The lower plate connected to the drive applied the strain, the upper plate is static. The geometry radius R is 10 mm. The gap between both plates has a height H of 1,600 µm. The pulsed air oven controls the temperature of the material (+/- 0.5°C).

Test execution:
- After GAP 0 at 130°C,
- placing the adhesive (1 cm³) on the lower plate;
- lowering the upper plate to a gap of 1,800 µm till its contacts the adhesive;
- removing excessive material;
- lowering the upper plate to a gap of 1,600 mm;
- setting the temperature to the start temperature of 130°C, the measurement strain to 20%, the constant oscillation frequency is 10 rad/s and the cooling rate is 5°C/min (from 130°C to 70°C);
- Between 70°C and 20°C, the measurement strain is 10%, the constant oscillation frequency is 10 rad/s and the cooling rate is 5°C/min
- Between 20°C and -20°C, the measurement strain is 1%; the constant oscillation frequency is 10 rad/s and the cooling rate is 5°C/min
- Between -20°C and -40°C, the measurement strain is 0,1%; the constant oscillation frequency is 10 rad/s and the cooling rate is 5°C/min
- after completing the test, melting the adhesive, lifting the upper plate and removing the adhesive from the lower and upper plate; and
- setting the temperature back to room temperature.

The glass transition temperature is then measured by measuring the crossover temperature between storage modulus and loss modulus for temperature higher than 50 °C ; or Tg is measured by measuring the temperature at the maximum of damping factor for temperature lower than 50 °C.

In addition, the hot melt pressure sensitive adhesive composition may have a viscosity at 163°C ranging from 200 to 40000 mPa.s, preferably ranging from 1000 to 25 000 mPa.s. This viscosity is measured according to ASTM method D-3236 (preferably with a spindle 27). Such viscosity is particularly suitable for nozzles in industrial units of coaters for its coating on a printable support layer.

In a preferred embodiment, the hot melt pressure-sensitive adhesive composition does not comprise a tackifier selected from glycol, glycerol and pentaerythritol esters of natural and modified rosins, such as, for example, the glycerol esters of pale wood rosin, the glycerol esters of (partially of fully) hydrogenated rosin, the glycerol esters of polymerized rosin, the pentaerythritol esters of pale wood rosin, the pentaerythritol esters of (partially of fully) hydrogenated rosin, the pentaerythritol esters of tall oil rosin and the phenolic modified pentaerythritol esters of rosin. Even more preferably, the hot melt pressure-sensitive adhesive composition does not comprise a tackifier selected from rosin ester and rosin ester derivatives.

The hot melt pressure sensitive adhesive composition of the present invention advantageously exhibits an average peel strength higher than 8 N/25 mm, preferably higher than 10 N/25 mm with an adhesive coating weight of 20 g/m² on stainless. The average peel strength is measured according to the method entitled "Peel test" described below.

The hot melt pressure sensitive adhesive composition advantageously exhibits good adhesive properties while being more environment-friendly.

The hot melt pressure sensitive adhesive of the invention advantageously has good adhesive properties on a wide range of temperature, even at low temperature (below 23°C), in particular from -10°C to 5°C, and even more preferably from -6°C to 5°C.

The hot melt pressure sensitive adhesive of the invention advantageously has good adhesive properties on different substrate such as on stainless, paper, or polypropylene.

The hot melt pressure sensitive adhesive composition of the invention advantageously has a high tack at room temperature (23°C).

The hot melt pressure sensitive adhesive is particularly well suitable for labelling refrigerated and semi-frozen articles (preferably at a temperature ranging from -6°C to 5°C).

The composition of the present invention may be prepared by mixing the ingredients at a temperature from 100 to 200°C until reaching a homogeneous mixture.

### Uses

The invention also relates to the use of the hot melt pressure-sensitive adhesive composition as described above, for bonding two substrates.

The present invention also concerns a multilayer system comprising:
- an adhesive layer (A) consisting of the HMPSA composition as disclosed herein;
- a support layer (B) adjacent to the adhesive layer (A); and
- a nonstick protective layer (C), adjacent to the adhesive layer (A).

### Adhesive layer (A):

The thickness of the adhesive layer (A) is preferably strictly greater than 10 µm, more preferably within a range of from 11 to 100 µm, more preferentially from 12 to 35 µm.

### Support layer (B):

The support layer (B) included in the multilayer system according to the invention is adjacent to the adhesive layer (A).

Layer (B) preferably consists of paper or of a film comprising one or more homogeneous layers of a polymer.

Among the suitable polymers, mention may be made of polyolefins, such as polyethylene, including high-density polyethylene, low-density polyethylene, linear low-density polyethylene and linear ultra-low-density polyethylene; polypropylene and polybutylenes; polystyrene; natural or synthetic rubber; vinyl copolymers, such as polyvinyl chloride, which may or may not be plasticized, and poly(vinyl acetate); olefinic copolymers, such as ethylene/methacrylate copolymers, ethylene/vinyl acetate copolymers, acrylonitrile/butadiene/styrene copolymers, and ethylene/propylene copolymers; acrylic polymers and copolymers; polyurethanes; polyethers; polyesters; and mixtures thereof.

Preferably, the support layer (B) is based on acrylic polymers, on polyethylene (PE), polypropylene (PP), which is oriented, non-oriented or biaxially oriented, polyimide, polyurethane, or polyester, such as polyethylene terephthalate (PET).

The support layer (B) may be a printable support layer.

### Nonstick protective layer (C):

The protective nonstick layer (C) can be easily removed without modifying the layer (A), which remains attached to the support layer (B).

According to a preferred embodiment, said layer (C) comprises a silicone-based material, said material either constituting said layer (C), or being present in the form of a surface coating of said layer (C), said coating being intended to be in contact with the adhesive layer (A).

According to a preferred embodiment of the multilayer system according to the invention, said system is packaged in the form of a winding around a reel (or roll), the dimensions of which can vary within a wide range. Thus, the diameter of such a roll may range from 0.25 to 1 m, and its width from 0.25 to 2 m.

According to this preferred embodiment, the protective nonstick layer (C) consists of the support layer (B) included in the multilayer system, wherein the face which is opposite the face in contact with the adhesive layer (A) is coated with a silicone-based material. Such a multilayer system in which the protective nonstick layer (C) is not distinct from the layer (B) is sometimes denoted by the name "linerless". Said packaging is particularly advantageous, because of its simplicity and the resulting economy, for converters who convert these roll stocks into final self-adhesive articles, such as labels or self-adhesive tapes.

The HMPSA composition is in particular applied in the melt state at a temperature above 130°C on the support layer (B) in an amount which is strictly greater than 10 g/m² and which generally ranges from 11 to 100 g/m², preferably from 11 to 35 g/m², to form the adhesive layer (A).

The application is carried out by known coating techniques such as for example lipped-nozzle coating (at a temperature of around 160°C to 180°C) or curtain coating (at a temperature of around 120°C to 180°C). The HMPSA is generally applied by a lipped nozzle onto the nonstick protective layer (C), the assembly then being laminated to the support layer (B) (transfer coating). The application of the HMPSA by curtain coating may be carried out directly on the support layer (B), depending on the coating temperature.

The present invention also relates to the use of the multilayer system as defined above for the manufacture of self-adhesive articles, such as self-adhesive labels and adhesive tapes.

Another subject of the invention is a self-adhesive label capable of being obtained by conversion of the multilayer system described above. In this case, a printable support layer (B) is preferred.

The conversion process carried out generally includes:
- a step of printing onto the printable support layer (B), then
- a step of cutting the multilayer system so as to reduce the width thereof, and therefore to repackage it on a reel of smaller width; then
- a step (termed "stripping") of obtaining a multilayer system, packaged on the reel of the preceding step, wherein the unchanged nonstick protective layer (C) is bonded just to the part of the printed support layer that corresponds to the shape and dimensions of the self-adhesive label designed for its final use. This step therefore consists in selectively cutting it and then removing the undesirable part of the printable support layer
(B) and of the adhesive layer (A), said part often being termed the "backbone of the label".

The latter multilayer system is employed on lines for packaging articles to be labeled, such as, for example, packages, by means of automated systems which separate the self-adhesive labels from the protective layer, and attach them to the articles to be labeled. The labeled article is preferably a package or container consisting of:
- glass;
- a usual plastic material chosen from polyethylene terephthalate (PET), polyvinyl chloride (PVC), polyethylene (PE), in particular high-density polyethylene (HDPE), or else polypropylene (PP); or
- cardboard, such as for example the cardboard known under the name FIPAGO cardboard (name originating from the Federation Internationale des fabricants de PApiers GOmmes (International Federation of the Manufacturers of Gummed Papers), of Kraftliner grade and weight per unit area 200 g/m².

The ranges disclosed in this description include both the lower and the upper limit thereof. For example, the expressions "ranging from x to y" or "between x and y" comprises the limits x and y.

## Claims

1. Hot melt pressure-sensitive adhesive composition comprising:
- at least 20% by weight of one or more block copolymer(s) (P1) comprising :
∘ a polymer block (A) containing a structural unit derived from an isoprenoid conjugated diene,
∘ a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- at least one bio-based tackifier resin selected from the group consisting of:
∘ natural or modified rosins such as, for example, gum rosins, wood rosins, tall-oil rosins, distilled rosins, (partially or fully) hydrogenated rosins, dimerized rosins and polymerized rosins;
∘ polyterpene derivatives;
∘ and mixtures thereof;
wherein the hot melt adhesive composition has a glass transition temperature lower than 0°C.

2. Hot melt pressure-sensitive adhesive composition according to claim 1, wherein the block copolymer (P1) further comprises a polymer block (C) comprising a structural unit derived from a conjugated diene except isoprenoid conjugated diene.

3. Hot melt pressure-sensitive adhesive composition according to any one of claims 1 or 2, wherein the isoprenoid conjugated diene is selected from myrcene, farnesene, and mixtures thereof, preferably the isoprenoid conjugated diene is farnesene.

4. Hot melt pressure-sensitive adhesive composition according to any one of claims 1 to 3, wherein the isoprenoid conjugated diene is derived from renewable material.

5. Hot melt pressure-sensitive adhesive composition according to any one of claims 1 to 4, wherein the polymer block (B) is obtained from aromatic vinyl compounds selected from styrene, α-methylstyrene, 2-methylstyrene, 3-methylstyrene, 4-methylstyrene, 4-propylstyrene, 4-tbutylstyrene, 4-cyclohexylstyrene, 4-dodecylstyrene, 2,4-dimethylstyrene, 2,4,6-trimethylstyrene, 2-ethyl-4-benzylstyrene, 4-(phenylbutyl)styrene, 1-vinylnaphtalene, 2-vinylnaphtalene, vinylanthracene, divinylstyrene, and mixtures thereof.

6. Hot melt pressure-sensitive adhesive composition according to any one of claims 1 to 5, wherein the polymer block (B) is obtained from styrene.

7. Hot melt pressure-sensitive adhesive composition according to any one of claims 1 to 6, wherein the styrene content in the block copolymer (P1) ranges from 2 to 50 %, preferably from 5 to 40%, more preferably from 8 to 30%, and even more preferably from 15 to 25%.

8. Hot melt pressure-sensitive adhesive composition according to any one of claims 1 to 7, wherein the block copolymer (P1) has a biocarbon content ranging from 45% to 80%, preferably from 45% to 65%.

9. Hot melt pressure-sensitive adhesive composition according to any one of claims 1 to 8, wherein the block copolymer (P1) has a melt flow rate (MFR) higher than 100 g/10 min, preferably higher than 500 g/10 min, and more preferably higher than 700 g/ 10 min.

10. Hot melt pressure-sensitive adhesive composition according to any one of claims 1 to 9, comprising 35% or more, preferably 40% or more, more preferably 45% or more by weight of the at least one block copolymer (P1) (or of the mixture of block copolymers (P1) in case a plurality of block copolymers (P1) are present in the hot melt pressure-sensitive adhesive composition) relative to the total weight of the composition.

11. Hot melt pressure-sensitive adhesive composition according to any one of claims 1 to 10, comprising more than 50% by weight of the at least one block copolymer (P1) (or of the mixture of block copolymers (P1) in case a plurality of block copolymers (P1) are present in the hot melt pressure-sensitive adhesive composition) relative to the total weight of the composition.

12. Hot melt pressure-sensitive adhesive composition according to any one of claims 1 to 11, wherein the bio-based tackifier resin is at least partially hydrogenated.

13. Hot melt pressure-sensitive adhesive composition according to any one of claims 1 to 12, wherein the bio-based tackifier resin is selected from natural or modified rosins such as, for example, gum rosins, wood rosins, tall-oil rosins, distilled rosins, (partially or fully) hydrogenated rosins, dimerized rosins and polymerized rosins, more preferably the bio-based tackifier resin is selected from partially or fully hydrogenated rosins.

14. Hot melt pressure-sensitive adhesive composition according to any one of claims 1 to 13, **characterized in that** it comprises less than 20% by weight of plasticizer(s), more preferably less than 10%, even more preferably less than 5% based on the total weight of said composition.

15. Hot melt pressure-sensitive adhesive composition according to any one of claims 1 to 14, wherein its biocarbon content is greater than or equal to 65 %, preferably greater than or equal to 70 %.

16. Hot melt pressure-sensitive adhesive composition according to any one of claims 1 to 15, having a glass transition temperature comprised from 0°C to -10°C, even more preferably from -4°C to -10°C.

17. Hot melt pressure-sensitive adhesive composition according to any one of claims 1 to 16, **characterized in that** it does not comprise a tackifier selected from rosin ester and rosin ester derivatives.

18. Hot melt pressure-sensitive adhesive composition according to any one of claims 1 to 17, **characterized in that** it comprises:
- more than 35% by weight of at least one block copolymer (P1) (relative to the total weight of the composition) comprising :
∘ a polymer block (A) containing a structural unit derived from an isoprenoid conjugated diene,
∘ a non-elastomeric polymer block (B) containing a structural unit derived from an aromatic vinyl compound;
wherein said block copolymer (P1) has a biocarbon content equal to or higher than 45%, and said block copolymer (P1) is at least partially hydrogenated;
- from 20% to 80 %, preferably from 40% to 75%, even more preferably from 50% to 70% by weight of at least one bio-based tackifier resin relative to the total weight of the composition, said bio-based tackifier being as defined above;
- less than 20%, preferably less than 10%, and more preferably less than 5% by weight of at least one plasticizer relative to the total weight of the composition;
wherein the hot melt pressure sensitive adhesive composition has a glass transition temperature lower than 0°C.

19. Multilayer system comprising:
- an adhesive layer (A) consisting of the hot melt pressure-sensitive adhesive composition as defined in any one of claims 1 to 18;
- a support layer (B) adjacent to the adhesive layer (A); and
- a nonstick protective layer (C), adjacent to the adhesive layer (A).

20. Use of the multilayer system according to claim 19, for the manufacture of self-adhesive articles, such as self-adhesive labels and adhesive tapes.

21. Self-adhesive label capable of being obtained by conversion of the multilayer system according to claim 19.
